(19) Europäisches Patentamt

European Patent Office

Office européen des brevets

(11) **EP 1 267 144 A1**

(12) **EUROPÄISCHE PATENTANMELDUNG**

(43) Veröffentlichungstag:
**18.12.2002 Patentblatt 2002/51**

(51) Int Cl.⁷: **G01B 11/00**

(21) Anmeldenummer: **02018614.4**

(22) Anmeldetag: **21.11.2000**

(84) Benannte Vertragsstaaten:
**AT BE CH CY DE DK ES FI FR GB GR IE IT LI LU MC NL PT SE TR**

(30) Priorität: **29.11.1999 DE 19957366**

(62) Dokumentnummer(n) der früheren Anmeldung(en) nach Art. 76 EPÜ:
**00993280.7 / 1 244 895**

(71) Anmelder: **DaimlerChrysler AG**
**70567 Stuttgart (DE)**

(72) Erfinder:
• **Zilker, Andreas, Dr.**
  **89346 Bibertal (DE)**
• **Ferber, Stefan, Dr.**
  **61476 Kronberg i. Ts. (DE)**

Bemerkungen:
Diese Anmeldung ist am 20 - 08 - 2002 als Teilanmeldung zu der unter INID-Kode 62 erwähnten Anmeldung eingereicht worden.

(54) **Verfahren zur Planung von Messbahnen für die Vermessung eines Objektes oder eines Teiles davon sowie Verfahren und Vorrichtung zur Vermessung eines Objektes oder eines Teiles davon**

(57) Die Aufgabe der vorliegenden Erfindung besteht daher darin, ein Verfahren zur Festlegung von Meßpositionen und ein Verfahren zur Planung von Meßbahnen für die Vermessung eines Objektes oder eines Teiles davon anzugeben sowie ein Verfahren und eine Vorrichtung zur Vermessung eines Objektes oder eines Teiles davon anzugeben

Die Aufgabe wird gelöst, durch ein Verfahren zur Festlegung von Meßpositionen bei dem aus einer Menge von Referenzpunkten eine Dreiecksoberfläche des zu vermessenden Objektes berechnet wird und jedem Dreieck eine Meßposition in definiertem Abstand zugeordnet wird. Diese Meßpositionen werden um einen Hilfspunkt herum mäanderförmig zu einer geeigneten Meßbahn angeordnet. Diese Meßbahn wird bei der Vermessung durchlaufen. Hierfür sorgt eine Einrichtung zur Festlegung dieser Meßpositionen und Planung dieser Meßbahn.

FIG. 2

EP 1 267 144 A1

**Beschreibung**

Die Erfindung betrifft ein Verfahren zur Planung von Meßbahnen gemäß dem Oberbegriff des Patentanspruchs 1 sowie die Anwendung des Verfahrens zur Planung von Meßbahnen zur Vermessung eines Objektes oder eines Teiles davon gemäß dem Oberbegriff des Patentanspruchs 3 sowie eine Vorrichtung zur Vermessung eines Objektes oder eines Teiles davon gemäß dem Oberbegriff des Patentanspruchs 4.

Verfahren sowie Vorrichtungen zur Vermessung eines Objektes sind aus [1, 2, 3, 4] bekannt.

Die Oberflächenvermessung mit optischen Meßsystemen, insbesondere mit aktiven Sichtsystemen, gewinnt in der Industrie mehr und mehr an Bedeutung. Für die Qualitätssicherung und im Reverse Engineering werden schon lange taktile 3D-Koordinatenmessmaschinen eingesetzt. Taktile Meßsysteme bieten aktive Meßstrategien für Standardmeßaufgaben (z.B. Messen von Bohrungen).

Aktives Messen sorgt für eine automatische, schnelle und kollisionsfreie Vermessung. Durch Berücksichtigung der technischen Randbedingungen eines Sensors beim aktiven Messen (z.B. Meßvolumen, Meßwinkel) wird zudem die Qualität einer Messung auch dann sichergestellt, wenn ein eingelernter Werker und nicht ein erfahrender Meßingenieur die Messung durchführt.

Optische Sensoren können wesentlich schneller messen und produktionsnäher eingesetzt werden als taktile Meßverfahren; deshalb finden sie immer weitere Verbreitung. Für das Reverse Engineering im Fahrzeug-Design haben optische Sensoren die taktile Meßtechnik häufig bereits abgelöst. Dort werden physikalische 1:5 oder 1:1 Modelle von Fahrzeugkarosserien digitalisiert, um die nötigen Daten für die Konstruktion in CAD-Systemen, für Virtual Reality Anwendungen oder für das Rapid Prototyping verfügbar zu machen. Aktives Messen mit optischen Sensoren ist allerdings noch nicht im Einsatz.

Ein wesentliches Erfordernis für aktives Messen ist die automatische Bestimmung optimaler Meßpositionen.

Ein aktives Meßsystem auf Basis eines Laser-Triangulationssensors, der mit einer Koordinatenmeßmaschine positioniert wird, wurde bereits vorgeschlagen [1]. Dabei muß zunächst das Gesamtmeßvolumens des Meßobjektes durch den Bediener eingegeben werden, dann nimmt das Meßsystem eine Grobvermessung vor, mit deren Hilfe geeignete Meßpositionen bestimmt und die Meßbahnen für die eigentliche Messung geplant werden. Angaben über die Durchführung dieser Planung werden nicht gegeben. Anschließend wird der Laser-Triangulationssensor mittels der Koordinatenmeßmaschine positioniert und die Vermessung des Meßobjektes durchgeführt. Dieses Meßsystem benötigt eine hochgenaue und teure Positioniereinheit und wird deshalb nur in klimatisierten Meßräumen eingesetzt.

Die Festlegung von Meßpositionen und die Planung von Meßbahnen für die aktive Objektvermessung erfordert generell a priori Wissen. Aus einer Menge von bekannten Referenzpunkten auf der Oberfläche des Meßobjektes soll eine geeignete Folge von geeigneten Sensorpositionen ermittelt werden. Bei dem in [1] vorgestellten Verfahren zur Objektvermessung werden die Referenzpunkte durch die der eigentlichen Vermessung vorausgehende Grobvermessung ermittelt. Angaben darüber, wie aus der Kenntnis der Referenzpunkte, geeignete Sensorpositionen (Meßpositionen) ermittelt und eine geeignete Abfolge des Anfahrens dieser Sensorpositionen geplant werden, sind [1] nicht zu entnehmen.

Die Aufgabe der vorliegenden Erfindung besteht daher darin, ein Verfahren zur Festlegung von Meßpositionen und ein Verfahren zur Planung von Meßbahnen für die Vermessung eines Objektes oder eines Teiles davon anzugeben sowie ein Verfahren und eine Vorrichtung zur Vermessung eines Objektes oder eines Teiles davon anzugeben.

Ein geeignetes Verfahren zur Festlegung von Meßpositionen für die Vermessung eines Objektes oder eines Teiles davon besteht darin, daß zunächst eine erste Repräsentation der Oberfläche des zu vermessenden Objektes oder des zu vermessendes Teiles bereitgestellt wird, bestehend aus einer Menge von Referenzpunkten,

- daß dann eine Dreiecksoberfläche berechnet wird durch Dreiecksvernetzung der Referenzpunkte,
- daß dann jedem Oberflächendreieck eine Meßposition außerhalb des zu vermessenden Objektes zugeordnet wird,
  die vom Schwerpunkt dieses Oberflächendreiecks einen definierten, zur Oberfläche des Oberflächendreiecks normalen Abstand aufweist.

Die Festlegung von Meßpositionen erfordert generell a priori Wissen über das zu vermessende Objekt, beispielsweise die Vorgabe von Referenzpunkten. Diese Referenzpunkte können durch eine der eigentlichen Vermessung vorausgehende Grobvermessung des Objektes bereitgestellt werden. Die Dreiecksvernetzung der Referenzpunkte liefert eine zweite Repräsentation der Oberfläche, wobei jedes Oberflächendreieck den entsprechenden Teil der Oberfläche repräsentiert. Die Zuordnung einer Meßposition in einer Position normal über dem Schwerpunkt des Dreiecks gewährleistet, daß alle Randbereiche des Dreiecks mit der gleichen Qualität vermessen werden. Die Vorgabe eines definierten Abstandes erlaubt die optimale Anpassung des Meßsensors an die Meßaufgabe oder des Abstandes an den Meßsensor.

Mittels dieses Verfahrens können Meßpositionen global, d.h. für die gesamte Vermessung festgelegt werden. Dies entspricht einem gesteuerten Verfahren.

In einer vorteilhaften Ausführungsform des Verfahrens werden die Meßpositionen inkrementell festgelegt, d.h. während der Vermessung werden die ursprünglich festgelegten Meßpositionen optimiert. Dies entspricht einem geregelten Verfahren.

Die inkrementelle Optimierung der Meßpositionen erfolgt derart,

- daß von einer vorgegebenen Meßposition aus, für einen von dort erfaßbaren Teil des zu vermessenden Objektes, eine Objektvermessung erfolgt, mittels derer die erste Repräsentation der Oberfläche verfeinert wird,
- daß eine verfeinerte Dreiecksoberfläche der verfeinerten Repräsentation der Oberfläche berechnet wird,
- daß anhand der verfeinerten Oberflächendreiecke neue Meßpositionen bestimmt werden.

Dadurch können auch Oberflächendetails optimal vermessen werden, die von einer der ursprünglich festgelegten Meßpositionen aus nur mit geringerer Meßqualität hätten vermessen werden können.

Bei einer besonders vorteilhaften Ausführungsform der inkrementellen Optimierung werden nur für die verfeinerten Oberflächendreiecke neue Meßpositionen bestimmt, deren Oberflächennormale über einen definierten Grenzwert hinaus von der Oberflächennormale des ursprünglichen Oberflächendreiecks abweicht.

Dieser Verfahrensschritt kann am Beispiel eines Außenspiegels an einem Fahrzeug leicht verdeutlicht werden. Angenommen aus der ursprünglichen Menge an Referenzpunkten wurde eine Dreiecksoberfläche des Fahrzeugs berechnet, die an der Position des Außenspiegels ein einziges Oberflächendreieck aufweist, zu dessen Oberflächennormale die Hauptachse des Außenspiegels annähernd parallel verläuft. Der Außenspiegel ragt quasi aus diesem Oberflächendreieck heraus. Es ist leicht verständlich, daß Teile des Außenspiegels aus der Meßposition, die diesem Oberflächendreieck zugeordnet ist, nur mit geringer Meßqualität vermessen werden kann. Die Oberflächennormalen eines Teils der verfeinerten Oberflächendreiecke weichen stark von der Oberflächennormale des ursprünglichen Oberflächendreiecks ab. Es ist daher sinnvoll für diese verfeinerten Oberflächendreiecke neue Meßpositionen festzulegen.

Gleichzeitig wird gewährleistet, daß nicht unnötig viele neue Meßpositionen festgelegt und bei einer späteren Vermessung angefahren werden. Eine unnötiger Rechenaufwand und eine unnötige Verlängerung der Vermessungsdauer werden so vermieden.

In einer vorteilhaften Ausführungsform des Verfahrens zur Festlegung von Meßpositionen wird aus mehreren benachbarten Meßpositionen eine reduzierte Zahl neuer Meßpositionen berechnet und diese neuen Meßpositionen ersetzen die mehreren ursprünglichen Meßpositionen, wenn

- die Gesamtfläche der einer neuen Meßposition zugehörigen Oberflächendreiecke einen definierten Grenzwert nicht überschreitet, und
- die Richtungen der Normalenvektoren der einer neuen Meßposition zugehörigen Oberflächendreiecke nicht über einen definierten Grenzwert hinaus voneinander abweichen.

Hierdurch wird gewährleistet, daß nicht unnötig viele festgelegte Meßpositionen bei der späteren Vermessung tatsächlich angefahren werden. Eine unnötiger Rechenaufwand und eine unnötige Verlängerung der Vermessungsdauer werden so vermieden.

Bei einer besonders vorteilhaften Ausführungsform der Reduzierung mehrerer benachbarter Meßpositionen werden

- der Grenzwert der Gesamtfläche der einer neuen Meßposition zugehörigen Oberflächendreiecke definiert in Abhängigkeit des Sichtfeldes eines für die Vermessung des Objektes verwendeten Meßsystems und/oder
- der Grenzwert der Abweichung der Richtungen der Normalenvektoren der einer neuen Meßposition zugehörigen Oberflächendreiecke definiert in Abhängigkeit einer gewünschten Meßgenauigkeit des Meßsystems.

Das Kriterium der maximalen Gesamtfläche gewährleistet beispielsweise, daß der Meßsensor des verwendeten Meßsystems von einer neuen Meßposition aus auch sämtliche zugehörigen Oberflächendreiecke vollständig erfassen kann oder daß er eine vorgegebene Meßqualität einhalten kann. Das Kriterium der maximalen Abweichung der Normalenvektoren gewährleistet, daß die Blickrichtung des Sensors nicht zu stark von der Oberflächennormale eines Dreiecks abweicht, wodurch die Meßqualität sinken würde.

In einer speziellen vorteilhaften Ausführungsform des Verfahrens zur Festlegung von Meßpositionen wird eine nach außen gerichtete Horizontalverschiebung der Meßposition durchgeführt, wobei außen in Bezug auf das zu vermessende Objekt definiert ist, wenn die Parallelprojektion einer Meßposition auf eine Horizontalebene innerhalb der Parallelprojektion des zu vermessenden Objektes auf die Horizontalebene liegt und der Abstand zwischen der Parallelprojektion der Meßposition und dem Rand der Parallelprojektion des zu vermessenden Objektes einen definierten Grenzwert überschreitet.

Diese spezielle Ausführungsform gewährleistet die Erreichbarkeit von Meßpositionen auch für den Fall, daß der Meßsensor bestimmte Bereiche, beispielsweise über einem zu vermessenden Objekt, nicht erreichen kann. Bei einer besonders vorteilhaften Ausführungsform der Horizontalverschiebung der Meßposition erfolgt diese derart,

daß zunächst

die Richtung und die Länge eines ersten Vektors berechnet werden,

der definiert ist

durch einen Anfangspunkt, der festgelegt ist durch

die Parallelprojektion der Meßposition auf die Horizontalebene,

und durch einen Endpunkt, der festgelegt ist durch

einen Punkt auf dem Rand der Parallelprojektion

des zu vermessenden Objektes auf die Horizontalebene,

der minimalen Abstand zu dem Anfangspunkt aufweist,

und daß dann

die Meßposition horizontal um einen zweiten Vektor verschoben wird,

- dessen Richtung gleich der des ersten Vektors ist und

- dessen Länge gleich ist der Differenz zwischen dem Grenzwert des Abstandes der Parallelprojektionen und der Länge des ersten Vektors,

und daß dann

diese Meßposition ersetzt wird durch die neue horizontal verschobene Meßposition.

Diese spezielle Ausführungsform gewährleistet die Erreichbarkeit von Meßpositionen und sorgt gleichzeitig dafür, daß der Betrag der Verschiebung einer Meßposition minimal ist (nämlich gleich der genannten Differenz). Dadurch wird auch die Qualitätseinbuße minimiert, die aus der Messung aus der verschobenen Meßposition gegenüber der ursprünglichen, nicht erreichbaren Meßposition resultiert.

In einer weiteren vorteilhaften Ausführungsform des Verfahrens zur Festlegung von Meßpositionen wird die Menge von Referenzpunkten photogrammetrisch bestimmt, vorzugsweise anhand von auf dem zu vermessenden Objekt anbringbaren und photogrammetrisch vermeßbaren Meßmarken.

Gerade große Objekte, beispielsweise Fahrzeuge werden häufig photogrammetrisch vermessen. Die dabei verwendeten Sensoren können das gesamte Objekt nicht bei einer einzigen Vermessung erfassen, sondern meist setzt sich die Gesamtvermessung aus mehreren Dutzend bis zu Hunderten Einzelmessungen zusammen. Dabei erfolgt das Zusammenfügen der Einzelmessungen mittels der Kenntnis der Positionen von Meßmarken, welche vor der Vermessung gleichmäßig verteilt auf dem Objekt angebracht werden. Deren Positionen werden vor der eigentlichen Vermessung des Objektes bestimmt, beispielsweise ebenfalls photogrammetrisch. Die Meßmarkenpositionen können aber neben dieser Funktion auch als Referenzpunkte für ein Verfahren zur Festlegung von Meßpositionen für die Fein-Vermessung genutzt werden. Die gleichmäßige Verteilung der Meßmarken gewährleistet eine geeignete Repräsentation der Oberfläche des zu vermessenden Objektes durch die so definierten Referenzpunkte.

Die Erfindung ist in Bezug auf das zu schaffende Verfahren zur Planung von Meßbahnen für die Vermessung eines Objektes oder eines Teiles davon durch die Merkmale des Patentanspruchs 1 wiedergegeben. Die weiteren Ansprüche enthalten vorteilhafte Ausgestaltungen und Weiterbildungen des erfindungsgemäßen Verfahrens (Patentansprüche 2 und 3).

Die Aufgabe wird bezüglich des zu schaffenden Verfahrens zur Planung von Meßbahnen für die Vermessung eines Objektes oder eines Teiles davon erfindungsgemäß dadurch gelöst, daß zunächst eine Menge von Meßpositionen bereitgestellt wird,

- daß ein fiktiver Hilfspunkt definiert wird, der sich im Inneren oder unter dem zu vermessenden Objekt befindet,

- daß ein fiktiver Halbellipsoid definiert wird, der das zu vermessende Objekt umschreibt und dessen Zenit sich senkrecht über dem Hilfspunkt befindet,

- daß die Meßpositionen derart um den Hilfspunkt herum sortiert werden,

- daß die Meßpositionen ausgehend von einer ersten Meßposition eine aufwärts und abwärts verlaufende, mäanderförmige Meßbahn bilden, derart

daß die Meßbahn im wesentlichen die Halbellipsoidoberfläche umläuft.

Eine in Hinsicht auf die Erreichbarkeit der Meßpositionen optimale Planung der Meßbahnen, d.h. Abfolge der anzufahrenden Meßpositionen, entspricht dem bekannten Vertreterproblem, welches in akzeptablen Zeiträumen nicht lösbar ist. Deshalb wird mit der das Objekt umlaufenden Mäanderbahn eine suboptimale Lösung gewählt, die ohne großen Zeitaufwand eine Meßbahn liefert, die sämtliche Meßpositionen in nahezu idealer Abfolge beinhaltet.

Die Meßpositionen weisen einen definierten Abstand zu der Oberfläche des zu vermessenden Objektes auf. Deshalb verläuft die Meßbahn im wesentlichen auf der Oberfläche eines fiktiven Körpers, der das Objekt in geeigneter Form umschreibt, wobei eine Körperform geeignet ist, wenn der Abstand seiner Oberfläche zu der des zu vermessenden Objektes im Mittel ungefähr der des definierten Abstandes entspricht. Ein einfaches Objekt mit einheitlichen Hauptachsen - beispielsweise ein Quader - wird in geeigneter Weise von einer Halbkugel umschrieben. Ein übliches Objekt mit uneinheitlichen Hauptachsen - beispielsweise ein Fahrzeug - wird in geeigneter Weise von einem Halbellipsoid umschrieben.

Die Meßbahn verläuft nur im wesentlichen und nicht tatsächlich auf der Oberfläche des fiktiven Halbellipsoids, da die Meßpositionen einen definierten Abstand zur (Repräsentation der) Oberfläche des zu vermessenden Objektes aufweisen. Deshalb können sich die Meßpositionen (und damit der zugehörige Teil der Meßbahn) sowohl innerhalb als auch außerhalb des fiktiven Halbellipsoids befinden. Tatsächlich verläuft nur die auf den Hilfspunkt bezogene Zentralprojektion der Meßbahn auf der Oberfläche des fiktiven Halbellipsoids.

Die Meßbahn beginnt an einer ersten Meßposition, die beispielsweise einer definierten Nullage des Sensors am nächsten gelegen ist oder die aus einer beliebigen Position des Sensors zu Meßbeginn am leichtesten oder schnellsten erreicht werden kann.

In einer vorteilhaften Ausführungsform des erfindungsgemäßen Verfahrens zur Planung von Meßbahnen wird eine Menge von Meßpositionen bereitgestellt, die nach einem der vorstehend beschriebenen Verfahren zur Festlegung von Meßpositionen bestimmt wurden. Der Vorteil besteht in der einfachen und schnellen Bestimmung der Meßpositionen und damit in deren schneller Bereitstellung für das Verfahren zur Planung von Meßbahnen.

In einer weiteren vorteilhaften Ausführungsform des erfindungsgemäßen Verfahrens zur Planung von Meßbahnen wird der fiktive Hilfspunkt $P$ berechnet gemäß

$$ P = \frac{1}{N} \sum_{i=1}^{N} (c_i - r n_i) $$

wobei $N$ gleich der Anzahl der Meßpositionen ist,
$c_i$ ist der Schwerpunkt des i-ten Oberflächendreiecks,
$n_i$ ist der Normalenvektor des i-ten Oberflächendreiecks,
$r$ ist ein positiver Skalar.

Der Ausdruck $c_i - r\, n_i$ definiert zu jedem Oberflächendreieck einen Punkt, der einen Abstand $r$ senkrecht zur Oberfläche des Dreiecks von dessen Schwerpunkt $c_i$ entfernt ist. Der Punkt liegt hinter dem Dreieck innerhalb oder unterhalb des zu vermessenden Objektes. Als Mittelwert aller dieser Punkte ergibt sich der Hilfspunkt $P$, der sich annähernd zentral innerhalb oder unterhalb des zu vermessenden Objektes befindet. Um einen solchen zentralen Punkt $P$ herum lassen sich die Meßpositionen über den Oberflächendreiecken in einfacher Weise sortieren, beispielsweise in dem ein fiktiver Halbellipsoid ausgehend von $P$ aufgespannt wird und die Meßpositionen derart sortiert werden, daß ihre Projektionen auf die Oberfläche des Halbellipsoids mäanderförmig das Objekt umlaufen .

Eine vorteilhafte Anwendung des erfindungsgemäßen Verfahrens zur Planung von Meßbahnen besteht darin, daß ein Meßsensor das zu vermessende Objekt oder den zu vermessenden Teil davon aus unterschiedlichen Meßpositionen vermißt, wobei die Meßbahn, entlang derer die Meßpositionen angefahren werden, nach dem erfindungsgemäßen Verfahren geplant wird.

Die Erfindung ist in Bezug auf die zu schaffende Vorrichtung zur Vermessung eines Objektes oder eines Teiles davon durch die Merkmale des Patentanspruchs 4 wiedergegeben.

Die erfindungsgemäße Lösung der Aufgabe bezüglich der zu schaffenden Vorrichtung zur Vermessung eines Objektes oder eines Teiles davon besteht darin, daß die Vorrichtung einen Meßsensor beinhaltet und eine Einrichtung zur Positionierung des Meßsensors an unterschiedlichen Meßpositionen sowie zusätzlich eine Einrichtung zur Planung einer Meßbahn, entlang derer die Meßpositionen angefahren werden, nach einem der vorstehend beschriebenen Verfahren zur Planung von Meßbahnen.

Die zeitliche und damit die ökonomische Effizienz der Verfahren und Vorrichtungen zur Vermessung eines Objektes oder eines Teiles davon sind hoch aufgrund der günstigen Festlegung der Meßpositionen bzw. Planung der Meßbahnen.

Nachfolgend werden anhand eines Ausführungsbeispiels und der Figuren 1 bis 3 die erfindungsgemäßen Verfahren und die erfindungsgemäße Vorrichtung näher erläutert. Dabei zeigen

Figur 1     Repräsentation der Oberfläche eines zu vermessenden Fahrzeugs durch eine Menge von Referenzpunkten.
(ermittelt aus den Positionen von auf der realen Oberfläche angebrachten Meßmarken)

Figur 2     Dreiecksoberfläche eines Fahrzeugs, berechnet durch Dreiecksvernetzung von Referenzpunkten.
Die äußeren Enden der dargestellten "Stacheln" geben die jedem Oberflächendreieck zugeordnete Meßposition an.

Figur 3     Verschiebung von Meßpositionen
Die Enden der "Stacheln" geben die verschobene Meßposition an.
Die von den "Stacheln" wegweisenden Enden der kurzen Linien geben die nicht erreichbaren Meßpositionen an.

Ein großes Objekt wie beispielsweise ein Fahrzeug ist mit dem in [1] vorgestellten Meßsystem nicht vermeßbar, da ausreichend genaue Positioniersysteme für Meßräume derartiger Abmessungen nicht zu akzeptablen Kosten zur Verfügung stehen.

Bei der Verwendung von Meßmarken und einem photogrammetrischen Meßverfahren und -system nach dem Prinzip der Streifenprojektion entfällt diese Beschränkung des Meßvolumens. Ein benötigter Streifenprojektionssensor kann mit einem mobilen Roboter positioniert werden. Der Roboter besteht aus einer mobilen Plattform mit drei und einem Armaufbau mit vier Freiheitsgraden. Der redundante Freiheitsgrad mit einem Ausleger ermöglicht die Vermessung von Motorhaube und Dach des Fahrzeugs, die sonst nicht erreichbar wären.

Gleichzeitig können bei einem solchen System die verwendeten Koordinatensysteme (des Roboters, des Meßsensors und des Objektes) besonders leicht ineinander überführt werden. Diese Abstimmung der Koordinatensysteme mittels der photogrammetrischen Vermessung erfolgt zu Beginn der Gesamtvermessung und wird nach jeder Einzelmessung aktualisiert. Dies gewährleistet die sichere Kenntnis der verschiedenen Positionen in einem einheitlichen Koordinatensystem. Anderenfalls könnten Meßfehler auftreten, wenn beispielsweise aufgrund von Radschlupf des Roboters dessen aus der ursprünglichen Koordinatentransformation hergeleitete aktuelle Position im Objektkoordinatensystem von seiner tatsächlichen aktuellen Position in diesem Koordinatensystem abweicht.

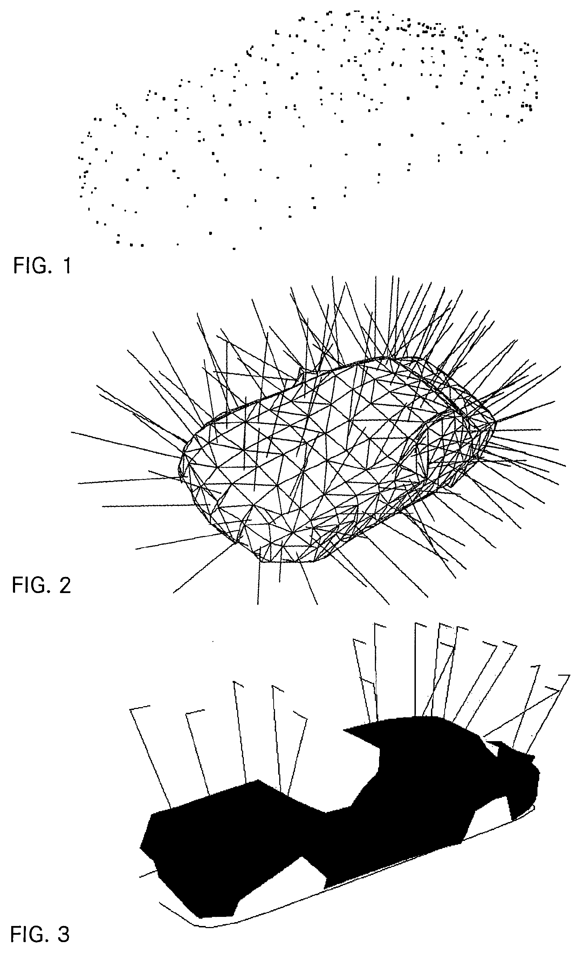

Für die photogrammetrische Gesamtvermessung des Fahrzeugs werden circa 150 bis 200 Einzelmessungen benötigt. Für die Navigation des Meßsensors und um die Einzelmessungen zusammenfügen zu können werden Meßmarken auf der Oberfläche des Fahrzeugs angebracht. Deren Positionen werden photogrammetrisch vermessen und bilden eine Menge von Referenzpunkten, wie sie in Figur 1 dargestellt ist. Durch Dreiecksvernetzung dieser Referenzpunkte wird eine Dreieckecksoberfläche des Fahrzeugs berechnet. Nachfolgend wird für jedes Oberflächendreieck eine Meßposition berechnet, Die Dreieckecksoberfläche und die Meßpositionen sind in Figur 2 dargestellt.

Die Berechnung der Meßpositionen erfolgt derart, daß zunächst jedem Oberflächendreieck eine Meßposition zugeordnet wird, die vom Schwerpunkt des Dreiecks den Arbeitsabstand des Sensors von 1 m hat. Der Abstand wird normal zur Dreiecksoberfläche gemessen.

Üblicherweise ergeben sich für das in Figur 1 dargestellte Beispiel eines Fahrzeuges circa 500 Meßpositionen.

Liegen die Oberflächendreiecke dicht beisammen und sind ihre Normalenvektoren nahezu parallel, dann ist es möglich ihre Oberflächen von einer gemeinsamen Meßposition aus zu vermessen ohne dadurch wesentliche Einbußen in der Qualität der Vermessung zu bewirken. Deshalb werden gemittelte Meßpositionen berechnet, welche die diesen Dreiecken zugeordneten Meßpositionen ersetzen, wenn zum einen alle Dreiecke noch im Blickfeld einer neuen Meßposition liegen (, da der Öffnungswinkel des Meßsensors auf 15° Abweichung von der Blickrichtung beschränkt ist) und wenn zum anderen die Oberflächennormalen aller Dreiecke weniger als 30° Abweichung von der Blickrichtung des Meßsensors abweichen.

Der Einfachheit halber wird bei der Überprüfung des ersten Kriteriums der bekannte Öffnungswinkel und Abstand des Meßsensors berücksichtigt und deshalb nur überprüft, ob die Gesamtfläche der jeweiligen benachbarten Dreiecke einen sich daraus ergebenden Grenzwert nicht überschreitet.

Ebenso wird bei der Überprüfung des zweiten Kriteriums nur die Abweichung der Oberflächennormalen der jeweiligen benachbarten Dreiecke untereinander überprüft. Schwanken diese nicht über einen gewissen Grenzwert, so weicht auch ihr Mittelwert nicht über diesen Grenzwert hinaus von der Blickrichtung des Meßsensors ab, wobei der Grenzwert in Abhängigkeit von der geforderten Meßgenauigkeit definiert wird. Durch die Anwendung dieser Kriterien können die beispielhaft genannten circa 500 Meßpositionen auf circa 150 notwendige Meßpositionen reduziert werden, ohne daß daraus wesentliche Einbußen in der Qualität der Vermessung resultieren.

Für die eigentlichen Messung muß der Meßsensor mittels des Roboters in einer der festgestellten Meßpositionen positioniert werden. Der Roboter besitzt jedoch eine von seinem Standpunkt begrenzte Reichweite. Deshalb sind Meßpositionen, die sich über dem Fahrzeugdach befinden nur innerhalb eines bestimmten Bereiches in der Nähe des Fahrzeugrandes zu erreichen. Weiter innen gelegene Meßpositionen können auch bei maximaler Ausfahrung des horizontalen Roboterarmes nicht erreicht werden. Deshalb müssen solche nicht erreichbaren Meßpositionen nach außen verschoben werden. Dieses Prinzip verdeutlicht die Figur 3.

Figur 3 zeigt eine grobe Repräsentation des Fahrzeuges. Auf dem Boden ist ein Polygon eingezeichnet, das eine Parallelprojektion des Fahrzeugs in die x-y-Ebene darstellt. Der Roboter kann sich nur außerhalb dieses Polygons bewegen. Lediglich sein Horizontalarm mit dem Meßsensor kann sich - beschränkt durch seine Reichweite - oberhalb des Fahrzeuges befinden. Deswegen muß für jede der ursprünglich festgelegten Meßpositionen überprüft werden, ob sie nach außen verschoben werden muß.

Die Verschiebung der Meßposition soll eine minimale Änderung der Meßqualität bewirken. Deshalb erfolgt sie horizontal, wodurch ein annähernd gleicher Abstand des Meßsensors zur Fahrzeugoberfläche gewährleistet wird, und um einen minimalen Betrag.

Die minimal notwendige Verschiebung der Meßposition wird wie folgt ermittelt: Zunächst wird durch die Parallelprojektion der Meßposition auf eine Horizontalebene (Boden) der Anfangspunkt eines ersten Vektors definiert. Der Endpunkt diese Vektors wird definiert durch einen Punkt auf dem Rand der Parallelprojektion des zu vermessenden Fahrzeugs auf die Horizontalebene, der minimalen Abstand zu dem Anfangspunkt aufweist. Von dem so definierten Vektor werden Richtung und Länge berechnet.

Wenn die Länge dieses Vektors größer ist als die maximale Ausfahrlänge des Roboterarms, dann ist die zugehörige Meßposition nicht erreichbar. Deshalb muß sie nach außen verschoben werden und zwar in ihrer Horizontalebene in Richtung des Vektors und um den Betrag, der gleich ist der Differenz zwischen der Ausfahrlänge und der Länge des Vektors. Diese so verschobene Meßposition ist dann einerseits gerade noch von dem Roboterarm erreichbar und andererseits nur minimal gegenüber der nicht erreichbaren Meßposition verschoben.

Für die festgelegten Meßpositionen muß eine Meßbahn geplant werden, d.h. eine geeignete Reihenfolge in der sie von dem Roboter angefahren werden.

Als Anfangspunkt der Meßbahn wird die Meßposition gewählt, die der Ausgangslage des Meßsensors am nächsten liegt.

Dann wird ein fiktiver Hilfspunkt $P$ berechnet gemäß

$$P = \frac{1}{N} \sum_{i=1}^{N} (c_i - r n_i)$$

wobei $N$ gleich der Anzahl der Meßpositionen ist,
$c_i$ ist der Schwerpunkt des i-ten Oberflächendreiecks,
$n_i$ ist der Normalenvektor des i-ten Oberflächendreiecks,
$r$ ist ein positiver Skalar.

Der Ausdruck $c_i - r\, n_i$ definiert zu jedem Oberflächendreieck einen Punkt, der einen Abstand $r$ senkrecht zur Oberfläche des Dreiecks von dessen Schwerpunkt $c_i$ entfernt ist. Der Punkt liegt hinter dem Dreieck innerhalb oder unterhalb des zu vermessenden Fahrzeuges. Als Mittelwert aller dieser Punkte ergibt sich der Hilfspunkt $P$, der sich annähernd zentral innerhalb oder unterhalb des zu vermessenden Fahrzeuges befindet.

Um diesen zentralen Punkt $P$ herum werden die Meßpositionen über den Oberflächendreiecken nun ausgehend vom Anfangspunkt derart sortiert, daß die aus dieser Sortierung resultierende Meßbahn das Fahrzeug im wesentlichen auf der Oberfläche eines fiktiven Halbellipsoids mäanderförmig umläuft, wobei der fiktive Halbellipsoid das zu vermessende Fahrzeug umschreibt und sein Zenit sich senkrecht über dem Hilfspunkt befindet.

Die Meßbahn verläuft nur im wesentlichen und nicht tatsächlich auf der Oberfläche des fiktiven Halbellipsoids, da die Meßpositionen einen definierten Abstand zur (Repräsentation der) Oberfläche des zu vermessenden Fahrzeuges aufweisen. Deshalb können sich die Meßpositionen (und damit der zugehörige Teil der Meßbahn) sowohl innerhalb als auch außerhalb des fiktiven Halbellipsoids befinden. Tatsächlich verläuft nur die auf den Hilfspunkt bezogene Zentralprojektion der Meßbahn auf der Oberfläche des fiktiven Halbellipsoids.

Die erfindungsgemäßen Verfahren und die erfindungsgemäße Vorrichtung erweisen sich in den Ausführungsformen des vorstehend beschriebenen Beispiels als besonders geeignet für die schnelle und einfache Vermessung großer Objekte, beispielsweise Fahrzeuge.

Die Erfindung ist nicht nur auf das zuvor geschilderte Ausführungsbeispiel beschränkt, sondern vielmehr auf weitere übertragbar. Dabei sind die Verfahren und die Vorrichtung im wesentlichen unabhängig von der Größe der zu vermessenden Objekte. Sehr große Objekte können genauso vermessen werden wie sehr kleine, solange nur geeignete Referenzpunkte zur Verfügung gestellt werden. Zu beachten ist lediglich hinsichtlich der Vorrichtung, daß sämtliche festgelegten Meßpositionen erreicht werden können.

Dies kann im ersten Fall - z.B. bei der Vermessung eines Zuges, Flugzeuges oder Schiffes - dadurch gewährleistet werden, daß ein Roboter mit genügender Reichweite, insbesondere hinsichtlich der Höhe, zur Positionierung des Meßsensors zur Verfügung gestellt wird.

Im zweiten Fall, also bei der Vermessung sehr kleiner Objekte, kann die Bereitstellung der Referenzpunkte anstatt durch die photogrammetrische Positionsermittlung von Meßmarken beispielsweise taktil erfolgen. Anstatt eines Robotors bietet sich hier die Verwendung eines kostengünstigen Drehtisches für die Positionierung des Meßsensors an.

Literatur

[1] Thorsten Glaschke, "Schnelle 3D-Digitalisierung", Spektrum, Nr. 74, S.10, 1999
[2] DE 41 23 955 A1
[3] US 4 928 175
[4] US 5 506 682

**Patentansprüche**

1. Verfahren zur Planung von Meßbahnen für die Vermessung eines Objektes oder eines Teiles davon, bei dem zunächst eine Menge von Meßpositionen bereitgestellt wird, **dadurch gekennzeichnet,**

   - **daß** ein fiktiver Hilfspunkt definiert wird, der sich im Inneren oder unter dem zu vermessenden Objekt befindet,

   - **daß** ein fiktiver Halbellipsoid definiert wird, der das zu vermessende Objekt umschreibt und dessen Zenit sich senkrecht über dem Hilfspunkt befindet,

- **daß** die Meßpositionen derart um den Hilfspunkt herum sortiert werden,

- **daß** die Meßpositionen ausgehend von einer ersten Meßposition eine aufwärts und abwärts verlaufende, mäanderförmige Meßbahn bilden, derart

   **daß** die Meßbahn im wesentlichen die Halbellipsoidoberfläche umläuft.

2. Verfahren nach Anspruch 1,
   **dadurch gekennzeichnet,**

   - **daß** der fiktive Hilfspunkt $P$ berechnet wird gemäß

$$P = \frac{1}{N} \sum_{i=1}^{N} (c_i - rn_i)$$

   wobei $N$ gleich der Anzahl der Meßpositionen ist, $c_i$ ist der Schwerpunkt des i-ten Oberflächendreiecks,
   $n_i$ ist der Normalenvektor des i-ten Oberflächendreiecks,
   $r$ ist ein positiver Skalar.

3. Verfahren nach einem der Ansprüche 1 oder 2,
   **dadurch gekennzeichnet,**

   - **daß** ein Meßsensor das zu vermessende Objekt oder den zu vermessenden Teil davon aus den unterschiedlichen Meßpositionen entlang der Meßbahn vermißt.

4. Vorrichtung zur Vermessung eines Objektes oder eines Teiles davon, enthaltend einen Meßsensor und eine Einrichtung zur Positionierung des Meßsensors an unterschiedlichen Meßpositionen,
   **dadurch gekennzeichnet,**

   - **daß** die Vorrichtung zusätzlich enthält eine Einrichtung zur Planung einer Meßbahn,
      entlang derer die Meßpositionen angefahren werden,
      nach einem der Ansprüche 1 oder 2.

FIG. 1

FIG. 2

FIG. 3

**Europäisches Patentamt**

## EUROPÄISCHER RECHERCHENBERICHT

Nummer der Anmeldung

EP 02 01 8614

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 40 06 949 A (BMW AG) 12. September 1991 (1991-09-12) * Zusammenfassung; Abbildung 4 * --- | 1,4 | G01B11/00 |
| A | US 4 806 777 A (ULBERS G. ET AL) 21. Februar 1989 (1989-02-21) * Zusammenfassung; Abbildung 3 * * Ansprüche 6,7 * ----- | 1,4 | |

**RECHERCHIERTE SACHGEBIETE (Int.Cl.7)**

G01B

Der vorliegende Recherchenbericht wurde für alle Patentansprüche erstellt

| Recherchenort | Abschlußdatum der Recherche | Prüfer |
|---|---|---|
| BERLIN | 30. September 2002 | Vorropoulos, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 02 01 8614

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-09-2002

| Im Recherchenbericht angeführtes Patentdokument | | Datum der Veröffentlichung | Mitglied(er) der Patentfamilie | | Datum der Veröffentlichung |
|---|---|---|---|---|---|
| DE 4006949 | A | 12-09-1991 | DE | 4006949 A1 | 12-09-1991 |
| US 4806777 | A | 21-02-1989 | DE | 3719422 A1 | 30-06-1988 |
| | | | EP | 0271646 A1 | 22-06-1988 |
| | | | JP | 63252211 A | 19-10-1988 |

Für nähere Einzelheiten zu diesem Anhang : siehe Amtsblatt des Europäischen Patentamts, Nr.12/82